(19) Europäisches Patentamt
European Patent Office
Office européen des brevets

(11) **EP 4 045 596 B1**

(12) **EUROPEAN PATENT SPECIFICATION**

(45) Date of publication and mention
of the grant of the patent:
**27.11.2024 Bulletin 2024/48**

(21) Application number: **20876489.4**

(22) Date of filing: **14.10.2020**

(51) International Patent Classification (IPC):
**C08L 89/00** (2006.01)      **C08J 9/00** (2006.01)
**C08J 9/12** (2006.01)      **B29C 45/76** (2006.01)
**B29C 45/47** (2006.01)      **B29C 45/77** (2006.01)
**B29C 45/84** (2006.01)

(52) Cooperative Patent Classification (CPC):
**B29C 45/7666; B29C 45/77; B29C 45/84;**
B29C 45/47; B29C 2945/76006; B29C 2945/76013;
B29C 2945/7602; B29C 2945/76026;
B29C 2945/76163; B29C 2945/76187;
B29C 2945/76214; B29C 2945/76939

(86) International application number:
**PCT/US2020/055528**

(87) International publication number:
**WO 2021/076587 (22.04.2021 Gazette 2021/16)**

(54) **AN APPARATUS AND A METHOD TO PREDICT THE REMAINING USEFUL LIFE OF A PLASTICIZING SCREW**

VORRICHTUNG UND VERFAHREN ZUR VORHERSAGE DER VERBLEIBENDEN LEBENSDAUER EINER PLASTIFIZIERSCHNECKE

APPAREIL ET PROCÉDÉ POUR PRÉDIRE LA DURÉE DE VIE UTILE RESTANTE D'UNE VIS DE PLASTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 US 201962915289 P**

(43) Date of publication of application:
**24.08.2022 Bulletin 2022/34**

(73) Proprietor: **Milacron LLC**
**Cincinnati, OH 45242 (US)**

(72) Inventors:
• **HILD, Stefan Georg**
  **8135 Langnau am Albis (CH)**
• **PANG, Severin Kin Yuen**
  **8048 Zürich (CH)**
• **FUGATE, Christopher**
  **Ludlow, Kentucky 41016 (US)**
• **JUMP, Edward Lee**
  **Independence, Kentucky 41051 (US)**
• **LILLBACK, Dan John**
  **Cincinnati, Ohio 45208 (US)**

(74) Representative: **Grünecker Patent- und Rechtsanwälte**
**PartG mbB**
**Leopoldstraße 4**
**80802 München (DE)**

(56) References cited:
**US-A1- 2002 172 733      US-A1- 2003 009 311**
**US-A1- 2019 140 526      US-B1- 6 332 355**

• **No further relevant documents disclosed**

**Description**

FIELD

The invention relates generally to an apparatus and a method to predict the remaining useful life of a plasticizing screw, and in particular, to an apparatus and a method to predict the remaining useful life of a plasticizing screw using adaptive learning.

BACKGROUND

Plastic injection molding uses a plasticizing screw to plasticize plastic pellets into moldable plastic, see for example US 6 332 355 B1. Being able to predict the remaining useful life of a plasticizing screw is desirable.

BRIEF SUMMARY

In an illustrated embodiment, a method to predict a remaining useful life of a plasticizing screw for an injection molding machine is provided. The method comprises: creating an energy-pressure ratio distribution estimate for normal operation of the screw for a mold; creating a temporally local energy-pressure ratio distribution estimate from real time data for the screw for the mold; comparing the local distribution with the distribution for normal operation; and generating an alert if the comparison of the two distributions predicts that the remaining useful life is negligible.

BRIEF DESCRIPTION OF THE DRAWINGS

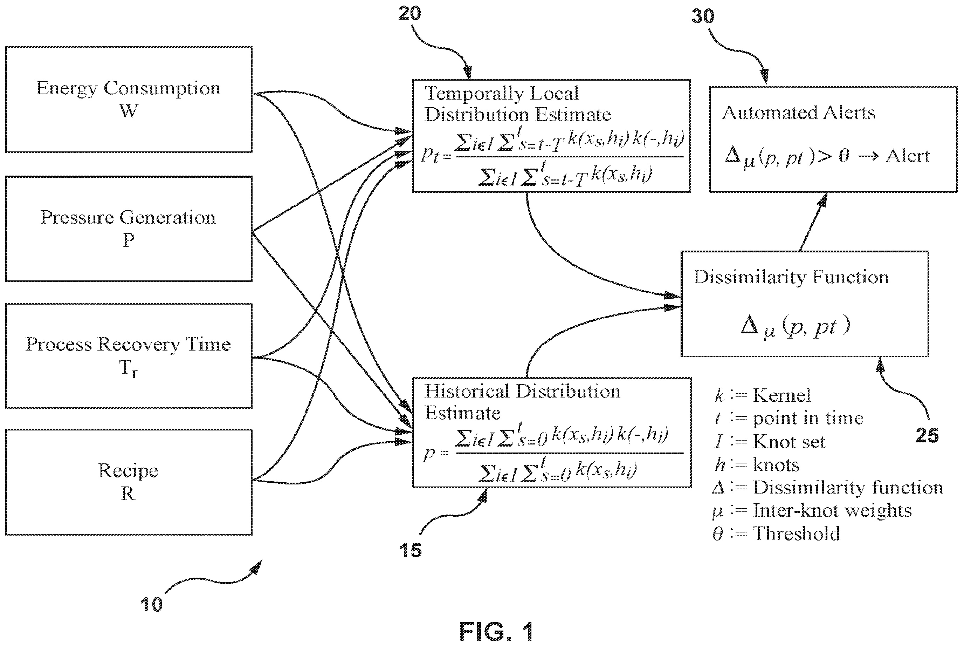

FIG. 1 is a schematic view of a method to predict the remaining useful life of a plasticizing screw, according to an embodiment of the present application.

DETAILED DESCRIPTION

FIG. 1 depicts a schematic view of a method to predict the remaining useful life of a plasticizing screw, generally indicated by 10. Method 10 comprises: creating an energy-pressure ratio distribution estimate for normal operation of the screw for a mold, as indicated by block 15; creating a temporally local energy-pressure ratio distribution estimate from real time data for the screw for the mold, as indicated by block 20; comparing the local distribution with the distribution for normal operation, as indicated by block 25; and generating an alert if the comparison of the two distributions predicts that the remaining useful life is negligible, as indicated by block 30. The input to blocks 15 and 20 are energy consumption W by the screw, pressure generation P by the screw, process recovery time $T_r$, and recipe R.

Pressure sensors in the injection molding machine can be used to measure the pressure P of the plastic produced by the screw. The energy consumption W used to operate the screw to generate the pressure generation P can be measured by measuring the mechanical energy applied to the motor drive.

In creating the energy-pressure ratio distribution estimate, data is collected over a selected number of injection cycles. The collected data is first subjected to a data cleansing operation to remove noise caused by the environment. Data cleansing can be effected by adaptive statistical methods based on statistical tools (e.g., running averages), but are adapting to environmental conditions through a feed-back loop that adjusts the amount of cleansing applied to the noise conditions detected by the algorithm. Consequently, in high-noise environments more cleansing is applied than in low-noise conditions. The cleansing is tuned to preserve the data detail required for further analysis. For example, a raw time-series sensor reading such as $S = [s1, s2, s3, .... sn]$ is cleaned by removing outliers that are outside a given band around the running average of S, whereby the width of the band and the length of the running average calculation is varied and adjusted based on environmental conditions.

The ratio of energy exerted on the screw (measured by mechanical energy applied to the motor drive) over the pressure created by the screw motion is expected to be equal, i.e. $e / p = k$. This equation can be augmented based on observations which will yield additional factors to account for material deviation (e.g., density or viscosity fluctuations of the granulate used). Once established, further deviations visible after cleansing are indicative of a deteriorating screw actions. Heuristics can be applied to each reading. Time is a dimension that deserves special treatment. Values that are out of range suddenly are treated differently than values that slowly drift over time.

The set can be extended by adding 1st derivative information to the time series, indicating a rate of change. Running average calculation is used to smooth this data.

The set can also be enhanced with spectrum information based on an FFT calculation over the time series data, indicating recurring frequencies within the measured data.

The historical distribution estimate can be created by either by engineering analysis, or by adaptively learning historically correct patterns using machine learning, or by some other means. For example, the following can be used to create the historical distribution estimate:

$$P(\cdot|T) = \frac{1}{|I_T|} \sum_{j \in I_T} \sum_i \delta_{\vec{x}_j \in B_i} \delta_{\cdot \in B_i}$$

$$P(\cdot) = \frac{1}{|I|} \sum_{j \in I} \sum_i \delta_{\vec{x}_j \in B_i} \delta_{\cdot \in B_i}$$

$$\Delta(P, Q) = \arg\min_f \sum_k \sum_l D_{k,l} f_{lk}$$

$$\text{s.t. } \delta_i f_{il} = P(B_l), \delta_i f_{k_i} = Q(B_k)$$

$\delta$ := Kronecker delta

$B$ := space partitions

$I$ := index set

$\Delta$ := Dissimilarity function

$D$ := Inter-partition distances

$\mathbb{R}_{\geq 0} \ni f :=$ Inter partition flows

The above method can be used to create a historical distribution estimate from data collected from a normal operation (i.e., where the screw is functioning properly) (i.e., block 15). The same technique can also be used to create a temporally local distribution estimate based on real time data (i.e., block 20). The historical distribution estimate can be compared to the temporally local distribution estimate using a dissimilarity function (i.e., block 25):

$$\Delta_\mu(p, p_t)$$

In the event that the dissimilarity function outputs a result greater than a threshold θ, an alert is generated (i.e., block 30).

Alert levels can be based on percentile abnormality, whereby abnormality is a quantified measure of the current data against historical distribution estimate. Thus, a small deviation over long periods of time is equivalent to a large deviation over a short period of time. The deviation is put in context to deviation typically seen on same/similar installations, and alerts levels are based on percentiles within that distribution. For example, if a particular deviation is larger than 80% of all comparable deviations, and particular alert level can get triggered.

Method 10 is a multi-dimensional probability distribution function. Block 20 computes the specific behaviour experienced recently, which can be the last cycle, the behaviour of recent period of time, or slightly longer. Method 10 considers the energy balance of the process - energy applied vs pressure generated - as key variables.

Method 10 can be performed by a computer, a networked of computers, or on the controller of the injection molding machine.

**Claims**

1. A method to predict a remaining useful life of a plasticizing screw for an injection molding machine, the method comprising:

creating an energy-pressure ratio distribution estimate for normal operation of the plasticizing screw for a mold;
creating a temporally local energy-pressure ratio distribution estimate from real time data for the plasticizing screw for the mold;
comparing the local energy-pressure ratio distribution estimate with the energy-pressure ratio distribution estimate for normal operation; and
generating an alert if the comparison of the two distributions predicts the remaining useful life is negligible.

2. The method of claim 1, wherein an input to the energy-pressure ratio distribution estimate for normal operation includes an energy consumption of the screw.

3. The method of claim 1, wherein an input to the energy-pressure ratio distribution estimate for normal operation includes a pressure generated by the screw.

4. The method of claim 1, wherein an input to the energy-pressure ratio distribution estimate for normal operation includes a process recovery time.

5. The method of claim 1, wherein an input to the energy-pressure ratio distribution estimate for normal operation includes a recipe.

6. The method of claim 1, wherein an input to the energy-pressure ratio distribution estimate for normal operation includes an energy consumption of the screw, a process recovery time, a pressure generated by the screw, and a recipe.

7. The method of claim 6 further comprising removing outliers from the real time data.

8. The method of claim 1, wherein an input to the local energy-pressure ratio distribution estimate includes an energy consumption of the screw.

9. The method of claim 1, wherein an input to the local energy-pressure ratio distribution estimate includes a pressure generated by the screw.

10. The method of claim 1, wherein an input to the local energy-pressure ratio distribution estimate includes a process recovery time.

11. The method of claim 1, wherein an input to the local energy-pressure ratio distribution estimate includes a recipe.

12. The method of claim 1, wherein an input to the local energy-pressure ratio distribution estimate includes an energy consumption of the screw, a process recovery time, a pressure generated by the screw, and a recipe.

13. The method of claim 12 further comprising removing outliers from the real time data.

14. The method of claim 1, wherein the comparing the local energy-pressure ratio distribution estimate with the energy-pressure ratio distribution estimate for normal operation includes using a dissimilarity function.

15. The method of claim 1, wherein the generating the alert includes basing alert levels on percentile abnormality, whereby abnormality is a quantified measure of the real time data against the energy-pressure ratio distribution estimate for normal operation.

**Patentansprüche**

1. Verfahren zur Vorhersage der verbleibenden Nutzungsdauer einer Plastifizierschnecke für eine Spritzgießmaschine, wobei das Verfahren umfasst:

Erstellen einer Schätzung des Energie-Druck-Verteilungsverhältnises für den Normalbetrieb der Plastifizierschnecke einer Form;

Erstellen einer zeitlich und räumlich begrenzten Schätzung eines Energie-Druck-Verteilungsverhältnises aus Echtzeitdaten für die Plastifizierschnecke der Form;

Vergleichen der räumlich begrenzten Schätzung des Energie-Druck-Verteilungsverhältnises mit der Schätzung des Energie-Druck-Verteilungsverhältnises für den Normalbetrieb; und

Erzeugen eines Alarms, wenn der Vergleich der beiden Verteilungen ergibt, dass die verbleibende Nutzungsdauer vernachlässigbar ist.

2. Verfahren nach Anspruch 1, wobei eine Eingabe für die Schätzung des Energie-Druck-Verteilungsverhältnises für den Normalbetrieb einen Energieverbrauch der Schnecke umfasst.

3. Verfahren nach Anspruch 1, wobei eine Eingabe für die Schätzung des Energie-Druck-Verteilungsverhältnises für den Normalbetrieb einen von der Schnecke erzeugten Druck umfasst.

4. Verfahren nach Anspruch 1, wobei eine Eingabe für die Schätzung des Energie-Druck-Verteilungsverhältnises für den Normalbetrieb eine Prozesswiederherstellungszeit umfasst.

5. Verfahren nach Anspruch 1, wobei eine Eingabe für die Schätzung des Energie-Druck-Verteilungsverhältnises für den Normalbetrieb eine Rezeptur umfasst.

6. Verfahren nach Anspruch 1, wobei eine Eingabe für die Schätzung des Energie-Druck-Verteilungsverhältnises für den Normalbetrieb einen Energieverbrauch der Schnecke, eine Prozesswiederherstellungszeit, einen von der Schnecke erzeugten Druck und eine Rezeptur umfasst.

7. Das Verfahren nach Anspruch 6, weiter umfassend das Entfernen von Ausreißern aus den Echtzeitdaten.

8. Das Verfahren nach Anspruch 1, wobei eine Eingabe für die Schätzung des räumlich begrenzten Energie-Druck-Verteilungsverhältnises einen Energieverbrauch der Schnecke umfasst.

9. Das Verfahren nach Anspruch 1, wobei eine Eingabe für die Schätzung des räumlich begrenzten Energie-Druck-Verteilungsverhältnises einen von der Schnecke erzeugten Druck umfasst.

10. Das Verfahren nach Anspruch 1, wobei eine Eingabe für die Schätzung des räumlich begrenzten Energie-Druck-Verteilungsverhältnises eine Prozesswiederherstellungszeit umfasst.

11. Das Verfahren nach Anspruch 1, wobei eine Eingabe für die Schätzung des räumlich begrenzten Energie-Druck-Verteilungsverhältnises eine Rezeptur umfasst.

12. Das Verfahren nach Anspruch 1, wobei eine Eingabe für die Schätzung des räumlich begrenzten Energie-Druck-Verteilungsverhältnises einen Energieverbrauch der Schraube, eine Prozesswiederherstellungszeit, einen von der Schnecke erzeugten Druck und eine Rezeptur umfasst.

13. Das Verfahren nach Anspruch 12, weiter umfassend das Entfernen von Ausreißern aus den Echtzeitdaten.

14. Das Verfahren nach Anspruch 1, wobei der Vergleich der Schätzung des räumlich begrenzten Energie-Druck-Verteilungsverhältnises mit der Schätzung des Energie-Druck-Verteilungsverhältnises für den Normalbetrieb die Verwendung einer Unähnlichkeitsfunktion umfasst.

15. Das Verfahren nach Anspruch 1, wobei das Erzeugen des Alarms das Basieren von Alarmstufen auf einer perzentilen Anomalie umfasst, wobei die Anomalie ein quantifiziertes Maß der Echtzeitdaten gegenüber der Schätzung des Energie-Druck-Verteilungsverhältnis für den Normalbetrieb ist.

**Revendications**

1. Procédé pour prédire une durée de vie utile restante d'une vis de plastification pour une machine de moulage par injection, le procédé comprenant les faits de :

créer une estimation de distribution de rapport énergie-pression pour fonctionnement normal de la vis de plastification pour un moule ;

créer une estimation de distribution temporellement locale de rapport énergie-pression à partir de données en temps réel pour la vis de plastification pour le moule ;

comparer l'estimation de distribution locale de rapport énergie-pression à l'estimation de distribution de rapport énergie-pression pour fonctionnement normal ; et

générer une alerte si la comparaison des deux distributions prédit que la durée de vie utile restante est négligeable.

2. Procédé de la revendication 1, dans lequel une entrée dans l'estimation de distribution de rapport énergie-pression pour fonctionnement normal inclut une consommation d'énergie de la vis.

3. Procédé de la revendication 1, dans lequel une entrée dans l'estimation de distribution de rapport énergie-pression pour fonctionnement normal inclut une pression générée par la vis.

4. Procédé de la revendication 1, dans lequel une entrée dans l'estimation de distribution de rapport énergie-pression pour fonctionnement normal inclut un temps de reprise de processus,

5. Procédé de la revendication 1, dans lequel une entrée dans l'estimation de distribution de rapport énergie-pression pour fonctionnement normal inclut une formule de mélange.

6. Procédé de la revendication 1, dans lequel une entrée dans l'estimation de distribution de rapport énergie-pression pour fonctionnement normal inclut une consommation d'énergie de la vis, un temps de reprise de processus, une pression générée par la vis, et une formule de mélange.

7. Procédé de la revendication 6, comprenant en outre le fait d'éliminer des aberrances des données en temps réel.

8. Procédé de la revendication 1, dans lequel une entrée dans l'estimation de distribution locale de rapport énergie-pression inclut une consommation d'énergie de la vis.

9. Procédé de la revendication 1, dans lequel une entrée dans l'estimation de distribution locale de rapport énergie-pression inclut une pression générée par la vis.

10. Procédé de la revendication 1, dans lequel une entrée dans l'estimation de distribution locale de rapport énergie-pression inclut un temps de reprise de processus.

11. Procédé de la revendication 1, dans lequel une entrée dans l'estimation de distribution locale de rapport énergie-pression inclut une formule de mélange.

12. Procédé de la revendication 1, dans lequel une entrée dans l'estimation de distribution locale de rapport énergie-pression inclut une consommation d'énergie de la vis, un temps de reprise de processus, une pression générée par la vis, et une formule de mélange.

13. Procédé de la revendication 12, comprenant en outre le fait d'éliminer des aberrances des données en temps réel.

14. Procédé de la revendication 1, dans lequel le fait de comparer l'estimation de distribution locale de rapport énergie-pression à l'estimation de distribution de rapport énergie-pression pour fonctionnement normal inclut le fait d'utiliser une fonction de dissimilarité.

15. Procédé de la revendication 1, dans lequel le fait générer l'alerte inclut le fait de baser des niveaux d'alerte sur une anomalie percentile, moyennant quoi l'anomalie est une mesure quantifiée des données en temps réel par rapport à l'estimation de distribution de rapport énergie-pression pour fonctionnement normal.

FIG. 1

**EP 4 045 596 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6332355 B1